# EUROPÄISCHE PATENTSCHRIFT

(11) **EP 3 456 416 B1**
(45) Veröffentlichungstag und Bekanntmachung des Hinweises auf die Patenterteilung: **01.04.2020**
(21) Anmeldenummer: 18192528.0
(22) Anmeldetag: 04.09.2018
(51) Int. Cl.: B02C 18/30, B02C 23/04, B02C 18/22, A22C 17/00

(54) **VORRICHTUNG ZUM FÖRDERN UND BEARBEITEN VON LEBENSMITTELN UND BETREFFENDES BETRIEBSVERFAHREN**
DEVICE FOR SUPPLYING AND PROCESSING FOOD AND RELEVANT OPERATING METHOD
DISPOSITIF DE TRANSPORT ET DE TRAITEMENT D'ALIMENTS ET PROCÉDÉ DE FONCTIONNEMENT CORRESPONDANT

(30) Priorität: 13.09.2017 DE 202017105549 U
(43) Veröffentlichungstag der Anmeldung: 20.03.2019
(73) Patentinhaber: VEMAG Maschinenbau GmbH, 27283 Verden/Aller (DE)
(72) Erfinder: Looft, Michael, 28832 Achim (DE)
(74) Vertreter: Eisenführ Speiser

(56) Entgegenhaltungen:
- EP-A2- 1 832 346
- DE-A1- 10 054 028
- DE-A1-102015 114 891

## Beschreibung

Die Erfindung betrifft eine Vorrichtung zum Fördern und Bearbeiten von Lebensmitteln, insbesondere Fleisch, mit einer Fülleinrichtung, einem mit der Fülleinrichtung koppelbaren Wolf mit einem Einlass und einem Auslass, und einem an dem Auslass anbringbaren Verschlusselement.

Für die Herstellung von Lebensmitteln, insbesondere Fleisch mit feiner Konsistenz müssen gewöhnlich verschiedene Ausgangsstoffe vermischt, vermengt, und bedarfsweise zerkleinert werden. Dieses geschieht mit Hilfe von Vorrichtungen der eingangs beschriebenen Art. In solchen Vorrichtungen werden die verschiedenen Ausgangsstoffe, wie beispielsweise Fleischwaren und andere Zutaten in einen Fülltrichter eingeführt, welcher einer Fülleinrichtung zugeordnet ist, und oft auch als Füllmaschine bezeichnet wird. Innerhalb einer solchen Fülleinrichtung kommt es zu einer Durchmischung der einzelnen Zutaten und eine Fördervorrichtung, wie etwa ein Schneckentrieb, fördert die vermengten Zutaten zu einem an die Vorrichtung angeschlossenen Wolf.

Ein solcher Wolf kann unterschiedliche Funktionen und Aufgaben übernehmen, wie beispielsweise Schneiden, Trennen oder Füllen. Daher wird ein solcher Wolf je nach Aufgabe und Ausprägung auch als Füllwolf, Trennwolf oder auch Schneidwolf bezeichnet. Ein solcher Wolf enthält typischerweise Schneidelemente, die zugeführtes Material zerkleinern und durch eine am Auslass des Wolfes angeordnete und den Auslass begrenzende Öffnung austreiben. Eine Begrenzung der Öffnung kann beispielsweise mittels eines Verschlusselementes erfolgen. Die Schneidelemente werden in an sich bekannter Weise von Antriebsmitteln angetrieben, die beispielsweise über eine Antriebswelle einen Moment auf die Schneidelemente übertragen. Dieses Antriebsmoment versetzt die Schneidelemente in Rotation, was einen Zerkleinerungsvorgang bewirkt.

Insbesondere bei der Verarbeitung von Fleisch setzten sich während des Bearbeitens unweigerlich Partikel unterschiedlicher Größe und Art im Inneren des Wolfes, insbesondere im Bereich der Schneidelemente fest. Diese Partikel können beispielsweise aus Fett, Fleisch, Knorpel oder Knochen bestehen. Um einen konstanten Austrag an zerkleinerter Masse zu erhalten und Beschädigungen der Vorrichtung zu vermeiden, ist es erforderlich, diese Partikel aus dem Inneren des Wolfes gelegentlich zu entfernen. Bei im Stand der Technik bekannten Wölfen ist es daher notwendig, die am Auslass des Wolfes angeordnete Lochscheibe zu entfernen und anschließend mit einem Abziehwerkzeug die Schneidelemente aus dem Wolf herauszuziehen.

Ein wesentliches Problem der im Stand der Technik bekannten Vorrichtung ist es, das bei geöffnetem Wolf die Gefahr besteht, dass die Vorrichtung in Gang gesetzt wird, während ein Bediener den Ausbau der Schneidelemente vornimmt. Es ist offensichtlich, dass dies ein erhebliches Verletzungsrisiko birgt. DE 10054028 A1 offenbart eine Zerkleinerungsmaschine mit einer als Lochscheibe ausgebildeten Sicherheitsvorrichtung. Die Lochscheibe weist einen Sensorchip auf, der bidirektional und drahtlos mit einer Sende- und Empfangsvorrichtung verbunden ist.

Eine Aufgabe der vorliegenden Erfindung war es demzufolge, eine Vorrichtung der eingangs bezeichneten Art dahingehend weiterzubilden, dass die im Stand der Technik aufgefundenen Nachteile möglichst weitgehend behoben werden, insbesondere eine Vorrichtung anzugeben, die das Verletzungsrisiko während des Wartens des Wolfes möglichst weitgehend vermindert.

Die vorliegende Erfindung löst das vorgenannte Problem bei einer Vorrichtung der eingangs genannten Art durch ein dem Verschlusselement zugeordneten Signalgeber und mindestens eine Signalleitvorrichtung zur Übertragung von Signalen des Signalgebers von dem Verschlusselement zu der Fülleinrichtung.

Diese Kombination aus Signalgeber und Signalleitvorrichtung bringt den Vorteil mit sich, dass sicher detektiert werden kann, dass das Verschlusselement, welches seinerseits sicherstellt, dass die Schneidelemente von einem Zugriff von außen geschützt werden, an dem Wolf bzw. an dessen Gehäuse angeordnet. Somit kann verhindert werden, dass bei einer Wartung des Wolfes, bei der das Verschlusselement von dem Wolfsgehäuse entfernt ist, versehentlich ein Betrieb der Schneidelemente initiiert wird. Ferner bringt die Anordnung aus Signalgeber und Signalleitvorrichtung den Vorteil mit sich, dass keine Sensoren an dem Verschlusselement angeordnet werden müssen und somit keine Kabel und dergleichen an dem Wolfsgehäuse angeordnet werden müssen. Ferner hat sich gezeigt, dass Wartungspersonal gelegentlich einigen Aufwand dahingehend betreibt, Sensoren zu manipulieren, um den Zeitaufwand, der zur Wartung erforderlich ist, oft zu Lasten der Sicherheit zu verringern. Eine solche erfindungsgemäße Anordnung von Signalgeber und Signalleitvorrichtung bringt in diesem Kontext ferner den Vorteil mit sich, dass diese weniger leicht manipulierbar ist, welches sich ebenfalls positiv auf die Betriebssicherheit auswirkt.

In einer weiteren Ausführungsform der erfindungsgemäßen Vorrichtung weist der Signalgeber mindestens einen permanenten und/oder nicht-permanenten Magneten auf. Die Verwendung eines magnetischen Signals stellt darüber hinaus eine besonders einfache und kostengünstigere Möglichkeit der Signalgebung dar und gleichzeitig eine Möglichkeit, die insgesamt weniger leicht zu manipulieren ist. So ist die Manipulation beispielsweise eines einfachen Druckschalters deutlich einfacher vorzunehmen, als eines solchen Magnetschalters, der darüber hinaus noch unauffällig im Gehäuse positionierbar ist, sodass die genaue Position des Magnetsignalgebers von einem Bediener oder vom Wartungspersonal nicht ohne Weiteres identifizierbar ist.

Weiterhin wird bevorzugt, dass die Signalleitvorrichtung dazu ausgebildet und eingerichtet ist, ein magnetisches Feld von dem Signalgeber zu der Fülleinrichtung zu leiten. Auch an dieser Stelle gelten die bereits oben genannten Vorteile analog, insbesondere lässt sich ein solcher Signalleiter zur Leitung von magnetischen Feldern besonders unauffällig in einem Wolf bzw. in dem betreffenden Gehäuse anordnen. Auch ist die Anordnung eines solchen Signalleiters insgesamt kostengünstig und im Rahmen einer Nachrüstung für bestehende Wölfe vornehmbar.

Die Erfindung wird dadurch weitergebildet, dass die Signalleitvorrichtung zur Übertragung des magnetischen Feldes mindestens eines der folgenden aufweist: Ferrit, Reineisen, Elektroblech, insbesondere ein Elektroblechpaket. Die beschriebenen Materialien und Anordnungen eignen sich sehr gut für eine weitestgehend verlustfreie Weiterleitung eines Magnetfeldes, sind dabei leicht zu verarbeiten, kostengünstig und flexibel einsetzbar. Weiterhin wird bevorzugt, dass die Signalleitvorrichtung als im Wesentlichen stabförmiges Element ausgebildet ist. Eine solche Anordnung ermöglicht die sichere Weiterleitung eines betreffenden Signals und erfordert darüber hinaus nur einen begrenzten Bauraum.

Gemäß einer bevorzugten Ausführungsform weist das stabförmige Element darüber hinaus eine Krümmung auf. Somit kann eine nicht fluchtende Anordnung von Signalgeber und einem betreffenden Sensor realisiert werden, womit eine solche Signalleitvorrichtung angepasst werden kann an bestehende Konstruktionen, wobei gleichzeitig eine Nachrüstbarkeit für bestehende Wölfe erreicht wird.

Die Erfindung wird dadurch weitergebildet, dass das stabförmige Element in einem Gehäusekörper des Wolfes angeordnet ist. Somit wird das stabförmige Element nach außen hin abgeschirmt und ist für den Bediener und das Wartungspersonal nicht sichtbar, welches Umgehungslösungen einer durch das Signal ausgelösten Sicherheitsabschaltung erschwert.

Weiterhin wird bevorzugt, dass die Fülleinrichtung einen Sensor zur Sensierung der von der Signalleitvorrichtung übertragenden Signale aufweist. Die Positionierung des Sensors kann dabei mit dem Ziel erfolgen, dass dieser insgesamt nur schwer manipulierbar ist und die Positionierung kann ferner Rücksicht nehmen auf konstruktive Gegebenheiten und Beschränkungen an der Fülleinrichtung und an dem Wolf.

Gemäß einer bevorzugten Ausführungsform ist der Sensor als induktiver Sensor ausgebildet. Eine Detektion von Magnetfeldern ist hiermit kostengünstig möglich und eine Manipulation eines solchen Sensors erfordert einigen Aufwand und ist nicht ohne Weiteres durchführbar.

In einem zweiten Aspekt wird die der Erfindung zugrunde liegende Aufgabe durch ein Verfahren gemäß Anspruch 10 gelöst. Die bereits oben diskutierten Vorteile werden hiermit einbezogen und gelten analog. Zusammenfassend ermöglicht das Verfahren die Überwachung der Position bzw. des Vorhandenseins eines Verschlusselements an einem Wolf auf einfache und kostengünstige Art und Weise, wobei gleichzeitig eine Manipulation einer solchen Detektion durch einen Bediener oder durch Wartungspersonal erschwert wird.

Gemäß einer bevorzugten Ausführungsform weist das Verfahren weiterhin den Schritt auf: Stoppen des Wolfes wenn kein Signal an der Fülleinrichtung sensiert wird. Der Wolf wird so sicher und unmittelbar gestoppt, wenn detektiert wird, dass sich das Verschlusselement nicht länger an dem Wolf befindet. Ferner bringt das Verfahren den Vorteil mit sich, dass im Falle eines Fehlers, beispielsweise durch einen Ausfall des Signalgebers oder des Sensors lediglich die Vorrichtung insgesamt gestoppt wird. Ein Ausfall von Signalgeber, Sensor oder Signalleiter kann also nicht dazu führen, dass die Schneidelemente eines Wolfes versehentlich aktiviert werden, obwohl das Verschlusselement möglicherweise nicht mehr vorhanden ist. Dieses trägt zur Erhöhung der Sicherheit zusätzlich bei.

Gemäß einer bevorzugten Weiterbildung ist das Signal ein magnetisches Signal, insbesondere ein magnetisches Feld. Bezüglich Vorteilen, die mit der Verwendung eines magnetischen Signales einhergehen, sei auf obige Ausführung verwiesen.

Weitere Merkmale und Vorteile der Erfindung ergeben sich aus den beigefügten Ansprüchen und der nachfolgenden Beschreibung, in der Ausführungsbeispiele anhand schematischer Zeichnungen im Einzelnen erläutert werden.

Im Einzelnen zeigen:
- Fig.1: ein erstes Ausführungsbeispiel einer erfindungsgemäßen Vorrichtung zum Fördern und Bearbeiten von Lebensmitteln in einer Schnittansicht von oben;
- Fig. 2: einen erfindungsgemäßen Signalgeber und eine erfindungsgemäße Signalleitvorrichtung, angeordnet in einem Gehäuse eines Wolfes, dargestellt in einer Schnittansicht von oben; und
- Fig. 3: einen Wolf nach Figur 2 mit erfindungsgemäßem Signalgeber und einer erfindungsgemäße Signalleitvorrichtung, wobei der Wolf an einer Fülleinrichtung angeordnet ist.

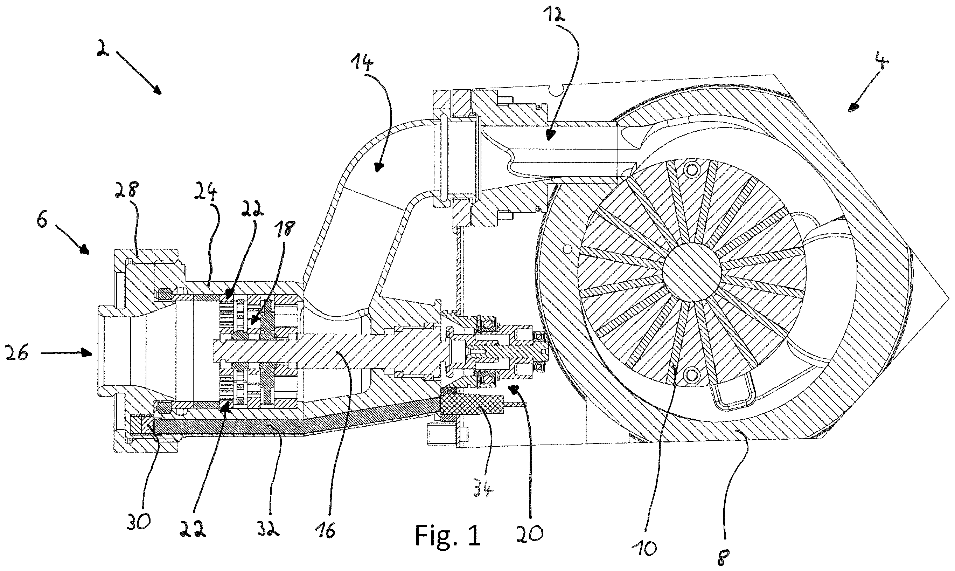

Figur 1 zeigt eine Vorrichtung zum Fördern und Bearbeiten von Lebensmitteln 2, welche eine Fülleinrichtung 4 sowie einen Wolf 6 aufweist. Die Fülleinrichtung 4 weist einen Trichter 8 auf, in den verschiedene Ausgangsstoffe, wie beispielsweise Fleischwaren, eingebracht werden können. Die Durchmischung der einzelnen Ausgangsstoffe erfolgt mittels eines Förderelementes 10, welches die Ausgangsstoffe ferner in Richtung des Auslasses 12 fördert. Die Fülleinrichtung 4 ist mittels eines Verbindungsrohrs 14 mit dem Wolf 6 materialleitend verbunden.

Der Wolf 6 weist ein Gehäuse 24 auf, welches an seiner Auslassseite 26 mittels eines Verschlusselementes 28 verschlossen ist. In dem Wolfgehäuse 24 ist eine Messerwelle 16 angeordnet, die von einem Messerwellenlager 18 sowie von einem Messerwellenlager und Antriebsabschnitt 20 gelagert und angetrieben wird. An der Messerwelle 16 sind ferner Schneidsätze 22 angeordnet. Ein Gemisch aus insbesondere Fleischwaren gelangt von dem Verbindungsrohr 14 in den Wolf 6 und wird insbesondere im Bereich der Schneidsätze 22 zerteilt und portioniert. Es verlässt den Wolf 6 schließlich über den Wolfauslass 26.

Das Verschlusselement 28 stellt weiterhin sicher, dass die rotierenden Teile der Schneidsätze 22 durch Zugriff von außen geschützt werden. Zur Detektion der Position des Verschlusselementes 28 sind in dem Verschlusselement 28 Magnete 30 angeordnet. Die Magnete 30 generieren ein magnetisches Feld, welches mittels des Signalleiters 32 weitestgehend verlustfrei übertragen wird in Richtung der Fülleinrichtung 4. Unmittelbar benachbart zum Signalleiter 32 ist in der Fülleinrichtung 4 ein Sensor 34 angeordnet. Bei diesem Sensor 34 handelt es sich vorliegend um einen induktiven Sensor, der dazu eingerichtet ist, das Vorhandensein eines Magnetfeldes zu detektieren. Ist das Verschlusselement 28 mit dem Gehäuse des Wolfs 24 verbunden, so wird das magnetische Signal bzw. Magnetfeld mittels des Signalleiters 32 von dem Magneten 30 hin zu dem Sensor 34 übertragen.

Wenn also der Sensor 34 das Vorhandensein eines magnetischen Feldes detektiert, so befindet sich das Verschlusselement 28 auf dem Wolfsgehäuse und die Vorrichtung 2 kann gefahrlos betrieben werden. Wird jedoch das Verschlusselement 28 vom Wolfsgehäuse 24 entfernt, so besteht prinzipiell eine Verletzungsgefahr für Wartungspersonal, insbesondere durch rotierende Elemente der Schneidsätze 22. Wird das Verschlusselement 28 von dem Wolfsgehäuse 24 entfernt, so grenzen in diesem Fall die in dem Verschlusselement 28 angeordneten Magnete 30 nicht länger an den Signalleiter 32 an. Der Signalleiter 32 leitet in diesem Fall nicht länger ein magnetisches Feld in Richtung des Sensors 34. In einem solchen Fall würde der Sensor 34 nicht länger das Vorhandensein eines Magnetfeldes detektieren und die Vorrichtung 2 würde gestoppt werden.

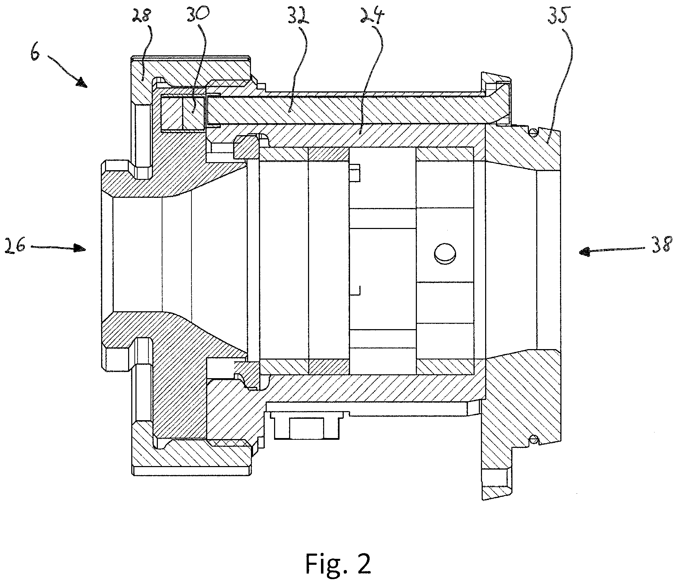

Ein alternatives Ausführungsbeispiel eines Wolfes 6 ist in Figur 2 gezeigt. Der Wolf 6 weist in an sich bekannter Weise ein Gehäuse 24 auf sowie ein Verschlusselement 28. In dem Verschlusselement 28 oder benachbart hierzu sind Magnete 30 angeordnet. Deren magnetisches Feld wird mittels eines Signalleiters 32 übertragen. Ein Sensor ist in der Figur 2 nicht dargestellt. Der Wolf 6 ist mittels des Verbindungsabschnittes 35 mit einer Fülleinrichtung (ebenfalls nicht dargestellt) koppelbar.

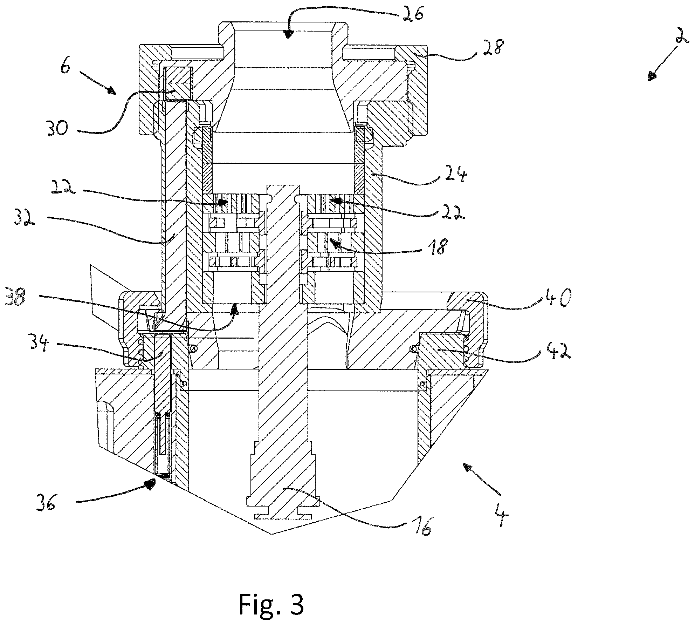

Der erfindungsgemäße Wolf 6 aus Figur 2 ist ferner in Figur 3, angeordnet an einer Fülleinrichtung 4, gezeigt. Der Wolf 6 weist ein Gehäuse 24 sowie ein Verschlusselement 28 auf. Mittels des Flanschabschnittes 40 ist der Wolf 6 mit einem Gewindeabschnitt 42 der Fülleinrichtung 4 koppelbar. Der Wolf 6 weist eine Messerwelle 16 auf, an der Schneidsätze 22 angeordnet sind. Die Messerwelle 16 ist zumindest einseitig mittels der Messerwellenlager 18 gelagert. Zu wolfendes Gut gelangt über den Wolfeinlass 38 von einer Fülleinrichtung 4 in den Wolf 6, wird mittels der Schneidsätze 22 zerkleinert und verlässt den Wolf 6 schließlich über den Auslass 26. Zur Detektion des Zustandes des Verschlusselementes 28 sind in dem Verschlusselement 28 oder benachbart zu diesem Magnete 30 angeordnet. In bekannter Weise wird das magnetische Feld der Magnete 30 mittels des Signalleiters 32 übertragen an den Sensor 34. Der Sensor 34 weist vorliegend Sensoranschlüsse 36 auf. Bezüglich der Übertragung des magnetischen Feldes von den Magneten 30 mittels des Signalleiters 32 zum Sensor 34 sei auf die Ausführungen zur Figur 1 verwiesen, welche vorliegend analog Gültigkeit besitzen.

### Liste der verwendeten Bezugszeichen

- 2: Vorrichtung zum Fördern und Bearbeiten von Lebensmitteln
- 4: Fülleinrichtung
- 6: Wolf
- 8: Trichter
- 10: Förderelement
- 12: Auslass
- 14: Verbindungsrohr
- 16: Messerwelle
- 18: Messerwellenlager
- 20: Messerwellenlager- und Antriebsabschnitt
- 22: Schneidsatz
- 24: Wolfgehäuse
- 26: Wolfauslass
- 28: Verschlusselement
- 30: Magnete
- 32: Signalleiter
- 34: Sensor
- 35: Verbindungsabschnitt
- 36: Sensoranschluss
- 38: Wolfeinlass
- 40: Flanschabschnitt
- 42: Gewindeabschnitt

## Patentansprüche

1. Vorrichtung (2) zum Fördern und Bearbeiten von Lebensmitteln, insbesondere Fleisch, mit einer Fülleinrichtung (4), einem mit der Fülleinrichtung (4) koppelbaren Wolf (6) mit einem Einlass und einem Auslass (26), und einem an dem Auslass (26) anbringbaren Verschlusselement (28),
**gekennzeichnet durch** ein dem Verschlusselement (28) zugeordneten Signalgeber (30) und mindestens eine Signalleitvorrichtung (32) zur Übertragung von Signalen des Signalgebers (30) von dem Verschlusselement (28) zu der Fülleinrichtung (4).

2. Vorrichtung (2) nach Anspruch 1,
**dadurch gekennzeichnet, dass** der Signalgeber (30) mindestens einen permanenten und/oder nicht-permanenten Magneten (30) aufweist.

3. Vorrichtung (2) nach einem der vorhergehenden Ansprüche, **dadurch gekennzeichnet, dass** die Signalleitvorrichtung (32) dazu ausgebildet und
eingerichtet ist, ein magnetisches Feld von dem Signalgeber (30) zu der Fülleinrichtung (4) zu leiten.

4. Vorrichtung (2) nach Anspruch 3, **dadurch gekennzeichnet, dass** die Signalleitvorrichtung (32) zur Übertragung des magnetischen Feldes mindestens eines der Folgenden aufweist:
- Ferrit,
- Reineisen,
- Elektroblech, insbesondere ein Elektroblechpaket.

5. Vorrichtung (2) nach einem der Ansprüche 2 - 4,
**dadurch gekennzeichnet, dass** die Signalleitvorrichtung (32) als im Wesentlichen stabförmiges Element ausgebildet ist.

6. Vorrichtung (2) nach Anspruch 5,
**dadurch gekennzeichnet, dass** das stabförmige Element eine Krümmung aufweist.

7. Vorrichtung (2) nach Anspruch 5 oder 6,
**dadurch gekennzeichnet, dass** das stabförmige Element in einem Gehäusekörper (24) des Wolfes (6) angeordnet ist.

8. Vorrichtung (2) nach einem der vorhergehenden Ansprüche,
**dadurch gekennzeichnet, dass** die Fülleinrichtung (4) einen Sensor (34) zur Sensierung der von der Signalleitvorrichtung (32) übertragenen Signale aufweist.

9. Vorrichtung (2) nach Anspruch 8,
**dadurch gekennzeichnet, dass** der Sensor (34) als induktiver Sensor ausgebildet ist.

10. Verfahren zum Betreiben einer Vorrichtung (2) zum Fördern und Bearbeiten von Lebensmitteln mit einer Fülleinrichtung (4) und einem Wolf (6), mindestens aufweisend die Schritte:
- Generierung eines Signals an einem Verschlusselement (28) des Wolfes (6) mittels eines Signalgebers (30);
- Übertragen des Signals von dem Signalgeber (30) an die Fülleinrichtung (4) mittels einer Signalleitvorrichtung (32);
- Sensierung des Signals an der Fülleinrichtung (4).

11. Verfahren nach Anspruch 10, weiterhin aufweisend den Schritt:
- Stoppen des Wolfes (6) wenn kein Signal an der Fülleinrichtung (4) sensiert wird.

12. Verfahren nach einem der Ansprüche 10 oder 11, **dadurch gekennzeichnet, dass** das Signal ein magnetisches Signal, insbesondere ein magnetisches Feld ist.

## Claims

1. An apparatus (2) for conveying and processing foodstuffs, in particular meat, comprising a filling device (4), a mincer (6) which can be coupled to the filling device (4) and having an inlet and an outlet (26), and a closure element (28) which can be mounted to the outlet (26),
**characterised by** a signaling device (30) associated with the closure element (28) and at least one signal line device (32) for the transmission of signals of the signaling device (30) from the closure element (28) to the filling device (4).

2. Anapparatus (2) as set forth in claim 1
**characterised in that** the signaling device (30) has at least one permanent and/or non-permanent magnet (30).

3. An apparatus (2) as set forth in one of the preceding claims
**characterised in that** the signal line device (32) is designed and adapted to pass a magnetic field from the signaling device (30) to the filling device (4).

4. An apparatus (2) as set forth in claim 3
**characterised in that** the signal line device (32) for transmission of the magnetic field has at least one of the following:
- ferrite,
- pure iron, and
- electrical plate, in particular an electrical plate pack.

5. An apparatus (2) as set forth in one of claims 2 through 4
**characterised in that** the signal line device (32) is in the form of a substantially bar-shaped element.

6. An apparatus (2) as set forth in claim 5
**characterised in that** the bar-shaped element has a curvature.

7. An apparatus (2) as set forth in claim 5 or claim 6
**characterised in that** the bar-shaped element is disposed in a housing body (24) of the mincer (6).

8. An apparatus (2) as set forth in one of the preceding claims
**characterised in that** the filling device (4) has a sensor (34) for sensing the signals transmitted by the signal line device (32).

9. An apparatus (2) as set forth in claim 8
**characterised in that** the sensor (34) is in the form of an inductive sensor.

10. A method of operating an apparatus (2) for conveying and processing food comprising a filling device (4) and a mincer (6), including at least the steps:
- generating a signal at a closure element (28) of the mincer (6) by means of a signaling device (30);
- transmitting the signal from the signaling device (30) to the filling device (4) by means of a signal line device (32); and
- sensing the signal at the filling device (4).

11. A method as set forth in claim 10 and further including the step:
- stopping the mincer (6) when no signal is sensed at the filling device (4).

12. A method as set forth in one of claims 10 and 11
**characterised in that** the signal is a magnetic signal, in particular a magnetic field.

## Revendications

1. Dispositif (2) de transport et de traitement de produits alimentaires, en particulier de viande, avec un système de remplissage (4), un hache-viande (6) pouvant être couplé au système de remplissage (4) avec une entrée et une sortie (26), et un élément de fermeture (28) pouvant être installé au niveau de la sortie (26),
**caractérisé par** un émetteur de signal (30) associé à l'élément de fermeture (28) et au moins un dispositif d'acheminement de signaux (32) servant à transmettre des signaux de l'émetteur de signal (30) depuis l'élément de fermeture (28) au système de remplissage (4) .

2. Dispositif (2) selon la revendication 1,
**caractérisé en ce que** l'émetteur de signal (30) présente au moins un aimant (30) permanent et/ou non permanent.

3. Dispositif (2) selon l'une quelconque des revendications précédentes,
**caractérisé en ce que** le dispositif d'acheminement de signaux (32) est réalisé et mis au point pour acheminer un champ magnétique depuis l'émetteur de signal (30) vers le système de remplissage (4).

4. Dispositif (2) selon la revendication 3, **caractérisé en ce que** le dispositif d'acheminement de signaux (32) servant à transmettre le champ magnétique présente au moins un des éléments suivants :
- de la ferrite,
- du fer pur,
- de la tôle électrique, en particulier un paquet de tôles électriques.

5. Dispositif (2) selon l'une quelconque des revendications 2 à 4,
**caractérisé en ce que** le dispositif d'acheminement de signaux (32) est réalisé sous la forme d'un élément sensiblement en forme de barre.

6. Dispositif (2) selon la revendication 5,
**caractérisé en ce que** l'élément en forme de barre présente une incurvation.

7. Dispositif (2) selon la revendication 5 ou 6,
**caractérisé en ce que** l'élément en forme de barre est disposé dans un corps de boîtier (24) du hache-viande (6).

8. Dispositif (2) selon l'une quelconque des revendications précédentes, **caractérisé en ce que** le système de remplissage (4) présente un capteur (34) servant à détecter les signaux transmis par le dispositif d'acheminement de signaux (32).

9. Dispositif (2) selon la revendication 8,
**caractérisé en ce que** le capteur (34) est réalisé sous la forme d'un capteur inductif.

10. Procédé servant à faire fonctionner un dispositif (2) de transport et de traitement de produits alimentaires avec un système de remplissage (4) et un hache-viande (6), présentant au moins les étapes :
- de génération d'un signal au niveau d'un élément de fermeture (28) du hache-viande (6) au moyen d'un émetteur de signal (30) ;
- de transmission du signal depuis l'émetteur de signal (30) au système de remplissage (4) au moyen d'un dispositif d'acheminement de signaux (32) ;
- de détection du signal au niveau du système de remplissage (4).

11. Procédé selon la revendication 10, présentant par ailleurs l'étape :
- d'arrêt du hache-viande (6) quand aucun signal n'a été détecté au niveau du système de remplissage (4).

12. Procédé selon l'une quelconque des revendications 10 ou 11, **caractérisé en ce que** le signal est un signal magnétique, en particulier un champ magnétique.
